# FASCICULE DE BREVET EUROPEEN

(11) **EP 0 511 040 B1**
(45) Date de publication et mention de la délivrance du brevet: **20.09.1995**
(21) Numéro de dépôt: 92400900.4
(22) Date de dépôt: 31.03.1992
(51) Int. Cl.: B23K 31/02

(54) **Procédé de raccordement d'une pièce en acier au manganèse à une autre pièce en acier au carbone et assemblage ainsi obtenu**
Verfahren zum Verbinden eines Stückes aus Manganstahl und eines Stückes aus Kohlenstoffstahl und hergestellte Verbindung
Process for joining a manganese steel workpiece to a carbon steel workpiece, and assembly obtained thereby

(30) Priorité: 24.04.1991 FR 9105067
(43) Date de publication de la demande: 28.10.1992
(73) Titulaire: MANOIR INDUSTRIES, F-75587 Paris Cedex 12 (FR)
(72) Inventeur: Pons, Fernand, F-27460 Alisay (FR); Spolidor, André, Marc, Joseph, F-27340 Pont-de-l'Arche (FR); Seillier, Daniel, Louis, F-62222 Saint-Martin-Lez-Boulogne (FR)
(74) Mandataire: Beauchamps, Georges

(56) Documents cités:
- FR-A- 2 353 360
- FR-A- 2 471 831

## Description

La présente invention concerne généralement un procédé de raccordement d'une pièce en acier au manganèse à une ou plusieurs pièces en acier au carbone.

L'invention trouve notamment application dans le domaine du chemin de fer pour le raccordement d'une pièce de voie formant coeur de croisement en acier au manganèse à au moins un rail en acier au carbone. Ces pièces de voie sont en acier à 12-14% en poids de manganèse.

Il est connu de raccorder une pièce en acier au manganèse à une autre pièce au carbone par l'intermédiaire d'un insert ou d'une pièce intermédiaire de même section transversale que les parties à assembler.

Cet insert est une pièce en acier austénitique ou austéno-ferritique et est obtenu par moulage ou par coulée.

Ainsi, FR-A-2 471 831 décrit un procédé de raccordement d'une pièce en acier ferritique à une pièce en acier au manganèse consistant à souder une pièce intermédiaire en un matériau austénitique à l'acier dur au manganèse, à ramener la longueur de la pièce intermédiaire à 5 à 20 mm, à soumettre l'ensemble pièce intermédiaire-pièce en acier au manganèse à un recuit et à une trempe à l'eau, et à souder l'ensemble pièce intermédiaire-pièce en acier au manganèse à la pièce en acier au carbone.

Cependant, un tel procédé nécessite l'utilisation d'un insert de forme dont la réalisation et la mise en oeuvre sont coûteuses.

Par ailleurs, le fait de souder l'insert à une pièce en acier au carbone par soudure à la poche ou par étincelage crée lors de chaque soudure un bourrelet important qui doit être éliminé mécaniquement, ce qui conduit à des contraintes majeures d'ordre métallurgique et économique, donc à un inconvénient grave.

Bien qu'entraînant des conséquence de moindre importance, la même formation d'un bourrelet est constatée lors de la soudure de l'insert à la pièce en acier au manganèse, toujours dans le cas de soudure à la poche ou par étincelage.

De plus, les pièces ainsi raccordées peuvent présenter des phases fragilisantes dans les zones de transition des soudures ainsi réalisées.

Enfin, un tel procédé de raccordement par l'intermédiaire d'un insert de forme engendre un temps de manipulation et une consommation d'énergie relativement importants.

L'invention a pour objet de pallier les inconvénients précités de l'art antérieur, en proposant un procédé de raccordement d'une pièce en acier au manganèse à au moins une autre pièce en acier au carbone, qui consiste à :
- déposer un acier inoxydable austéno-ferritique à l'extrémité d'au moins une pièce en acier au carbone ; et
- souder la pièce en acier au carbone munie à son extrémité du dépôt ainsi obtenu, à la pièce en acier au manganèse.

Ce procédé consiste plus précisément à :
- préchauffer, avant l'étape de dépôt précitée, la pièce en acier au carbone à environ 300-600°C ;
- réaliser un dépôt d'acier inoxydable austéno-ferritique sur l'extrémité de la pièce en acier au carbone au moyen d'un fil tel que par le procédé MIG ou le procédé TIG ou au moyen d'électrodes ;
- soumettre à un refroidissement contrôlé la pièce en acier au carbone comportant à son extrémité le dépôt, immédiatement après la réalisation de ce dépôt, et
- souder la pièce en acier au carbone par son extrémité comportant ledit dépôt à la pièce en acier au manganèse par une technique quelconque de soudage.

On précisera ici qu'après l'étape de refroidissement contrôlé, la pièce en acier au carbone possédant à son extrémité le dépôt est soumise à un traitement de surfaçage de ce dépôt, ledit refroidissement contrôlé s'effectuant depuis environ 600°C jusqu'à la température ambiante.

Selon une caractéristique avantageuse de l'invention, la pièce en acier au carbone possédant à son extrémité le dépôt est soudée à la pièce en acier au manganèse par une technique de soudage telle que par faisceau d'électrons ou faisceau laser.

Selon une autre caractéristique avantageuse de l'invention, l'épaisseur du dépôt d'acier inoxydable austéno-ferritique sur la pièce en acier au carbone, est comprise entre 1 et 20 millimètres.

Selon encore une autre caractéristique de l'invention, l'acier inoxydable austéno-ferritique qui est déposé sur la pièce en acier au carbone, a la composition chimique suivante :

| | |
|---|---|
| Carbone | 0,025 - 0,035% en poids |
| Manganèse | 6 - 11% en poids |
| Silicium | 0,5 - 1,5% en poids |
| Nickel | 5 - 8% en poids |
| Chrome | 17,5 - 20% en poids |
| Molybdène | 0,5% en poids |
| Niobium | 0,25 - 0,35% en poids |
| Azote | résiduel allant jusqu'à 700 ppm |
| Phosphore et soufre | 0,030% en poids |

et dont la teneur en ferrite delta mesurée par comptage est comprise entre environ 5 et 15% en volume.

D'autres caractéristiques et avantages du procédé, selon l'invention apparaîtront mieux à la lecture de la description détaillée qui suit, illustrée par les dessins annexes.

La figure 1 représente schématiquement une portion de rail en acier au carbone comportant un dépôt sur l'une de ses extrémités.

La figure 2 représente schématiquement une portion de rail muni de son dépôt et raccordé à l'extrémité d'une pièce de voie suivant le procédé de l'invention.

La figure 3 est une micrographie d'un exemple de dépôt en acier inoxydable austéno-ferritique réalisé, suivant l'invention, sur une pièce en acier au carbone, telle qu'un rail.

La figure 4 est une vue de côté illustrant un assemblage réalisé conformément au procédé de l'invention et ayant subi un essai de flexion.

Selon le procédé de cette invention, la pièce en acier au carbone, qui est un tronçon de rail 2, est tout d'abord préchauffée entre 300-600°C dans un four.

A l'extrémité de la pièce en acier en carbone est déposé un acier inoxydable austéno-ferritique 1. Ce dépôt s'effectue au moyen d'un fil par le procédé MIG ou le procédé TIG de manière manuelle ou automatique, le fil réalisant le dépôt ayant la composition donnée ci-après. On pourrait parfaitement utiliser, à la place d'un fil, des électrodes dont la matière, comme celle du fil, constituerait, ledit dépôt d'acier austéno-ferritique.

L'application de ce dépôt se fait de préférence à une épaisseur relativement faible comprise entre environ 1 mm et 20 mm, et constitue un apport de matière avantageusement très faible et peu coûteux, comparativement à l'apport de matière important et coûteux exigé par la présence d'un insert comme cela était le cas dans l'art antérieur.

De plus, un tel dépôt très mince peut être réalisé automatiquement et beaucoup plus rapidement que dans les techniques antérieures de soudage d'insert.

Par ailleurs, aucun bourrelet n'apparaît après le dépôt sur la pièce en acier au carbone contrairement à ce qui se passe à l'issue d'un soudage à la poche ou par étincelage.

Les conditions de réalisation de ce dépôt et de son traitement thermique évitent avantageusement toute formation d'une phase fragilisante.

La composition de l'acier inoxydable austéno-ferritique, initialement sous forme de fil, électrode ou analogue qui est déposé est la suivante :

| | |
|---|---|
| Carbone | 0,025 - 0,035% en poids |
| Manganèse | 6 - 11% en poids |
| Silicium | 0,5 - 1,5% en poids |
| Nickel | 5 - 8% en poids |
| Chrome | 17,5 - 20% en poids |
| Molybdène | 0,5% en poids |
| Niobium | 0,25 - 0,35% en poids |
| Azote | résiduel allant jusqu'à 700 ppm |
| Phosphore et soufre | 0,030% en poids |

Cette composition, selon le diagramme de Schaeffler, comprend 8,75 à 14,55% de nickel équivalent et 18,25 à 22,75% de chrome équivalent.

La teneur en ferrite delta, contenu dans l'acier inoxydable, varie de 5 à 15% en volume, le reste étant de l'austénite.

Cette teneur en ferrite delta est mesurée par comptage micrographique selon la norme ASTM E562.

Le fil utilisé lors du procédé MIG ou du procédé TIG ou bien les électrodes utilisées pour réaliser le dépôt, possèdent bien entendu la composition chimique précitée.

Cette composition chimique est de préférence la suivante :

| | |
|---|---|
| Carbone | 0,030 % en poids |
| Manganèse | 6,20 % en poids |
| Silicium | 0,80 % en poids |
| Nickel | 7,90 % en poids |
| Chrome | 18,20% en poids |
| Molybdène | traces |
| Niobium | 0,30% en poids |
| Azote | résiduel allant jusqu'à 700ppm |
| Phosphore et soufre | 0,030% en poids. |

La teneur en ferrite delta pour cette composition préférentielle est comprise entre 6 et 10% en volume.

Selon le diagramme de Schaeffler, le nickel équivalent est alors de 11,9% et le chrome équivalent est de 19,4%.

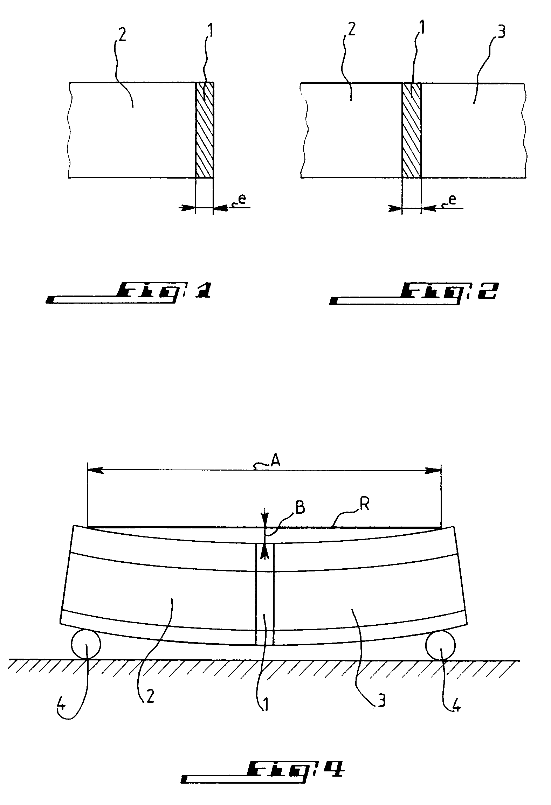

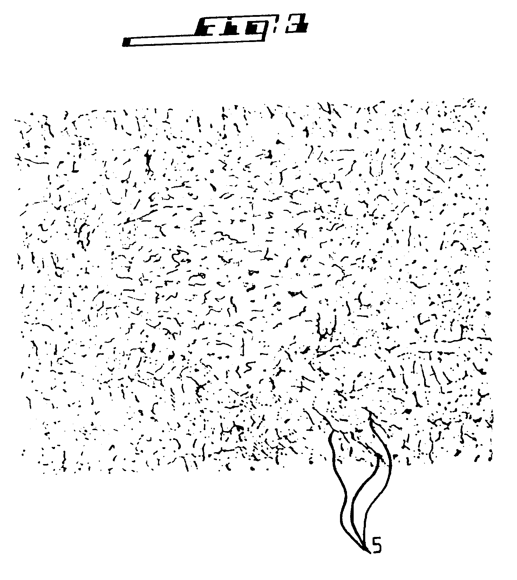

De telles compositions donnent des aciers austéno-ferritiques, qui sont particulièrement intéressants du fait que tout en gardant une bonne soudabilité, elles engendrent d'excellentes propriétés de résistance mécaniques et à l'usure. Autrement dit, l'acier austéno-ferritique réalise un compromis avantageux entre les différentes propriétés qui sont : la soudabilité, le bon comportement à l'écrouissage, le manganèse engendrant la résistance à l'usure, et une bonne résistance mécanique due à la ferrite dont les îlots visibles en 5 sur la microphotographie de la figure 3 bloquent la propagation des fissures.

La pièce en acier au carbone 2 possédant à son extrémité le dépôt 1 est soumise à un refroidissement contrôlé de 600°C environ jusqu'à la température ambiante, immédiatement après l'exécution du dépôt.

L'ensemble de la pièce en acier au carbone 2 avec son dépôt d'extrémité 1 est soumis à un traitement de surfaçage.

L'épaisseur "e" (figures 1 et 2) du dépôt après l'opération de surfaçage est comprise entre 1 et 20 mm et de préférence entre 1 et 10mm.

Cette très faible épaisseur du dépôt est l'une des caractéristiques particulièrement avantageuse de l'invention.

Finalement, l'ensemble précité 1-2 est soudé à la pièce en acier au manganèse 3 par toute technique de soudage appropriée.

Suivant un mode préféré de réalisation du procédé, une technique de soudage par faisceau d'électrons ou par faisceau laser est utilisée.

Ces techniques permettent une rapidité et une précision d'exécution nettement meilleures. Par ailleurs, elles suppriment la formation d'un bourrelet qui apparaîtrait nécessairement dans le cas d'une soudure à la poche ou par étincelage.

Comme on le voit sur les figures 1 et 2, l'épaisseur "e" du dépôt 1 effectué sur la pièce en acier au carbone 2 après surfaçage du dépôt n'est pas modifiée par la suite par l'opération de soudage du dépôt 1 sur la pièce en acier au manganèse 3.

Ainsi, le procédé selon l'invention permet de réduire considérablement le coût d'exécution des soudures en diminuant les consommations de matière et d'énergie, d'éviter la formation de bourrelets et leur élimination subséquente et coûteuse, et surtout d'éviter l'utilisation supplémentaire et coûteuse d'une pièce de forme ou insert en acier austénitique ou austéno-ferritique, puisqu'on applique directement, selon l'invention, un dépôt mince en acier austéno-ferritique sur la pièce en acier au carbone.

L'assemblage des pièces 2 et 3 raccordées selon le procédé de l'invention par le dépôt 1 présente des caractéristiques mécaniques excellentes en dureté, allongement, résistance, et pliage.

A cet égard, on a réalisé un essai de flexion, comme montré sur la fig ure 4, selon la norme allemande DV 820-400. Cet essai a montré qu'aucune fissure n'est apparue alors que la déformation rémanente atteignait les 18 mm de flèche requis par la norme. On a montré en A la distance (1 mètre) entre les appuis 4 lors de l'essai, en R une réglette matérialisant l'horizontale, et en B la flèche de 18 mm correspondant à la déformation rémanente de la pièce d'essai.

On observera encore que lors du passage d'une charge roulante, telle qu'un train, sur l'assemblage obtenu par le procédé de l'invention, le risque d'affaissement est éliminé en raison de la très faible épaisseur du dépôt 1 entre la pièce au carbone ou rail 2, et la pièce au manganèse ou de voie 3 raccordées par ledit dépôt.

Le procédé de l'invention s'applique en effet principalement au raccordement des rails en acier au carbone à des pièces de voie en acier au manganèse à 12-14% en poids de manganèse.

Les assemblages fabriqués selon l'invention répondent largement aux normes de sécurité appliquées par les chemins de fer tant à l' étranger qu'en France.

Bien entendu, l'invention comprend tous les moyens constituant des équivalents techniques des moyens décrits ainsi que leurs combinaisons si celles-ci sont effectuées dans son esprit.

## Revendications

1. Procédé de raccordement d'une pièce en acier au manganèse à au moins une autre pièce en acier au carbone, caractérisé en ce qu'il consiste à :
- déposer un acier inoxydable austéno-ferritique à l'extrémité d'au moins une pièce en acier au carbone, et
- souder la pièce en acier au carbone munie à son extrémité du dépôt ainsi obtenu, à la pièce en acier au manganèse.

2. Procédé selon la revendication 1, caractérisé en ce qu'il consiste à :
- préchauffer, avant l'étape de dépôt précitée, la pièce en acier au carbone à environ 300-600°C ;
- réaliser un dépôt d'acier inoxydable austéno-ferritique sur l'extrémité de la pièce en acier au carbone au moyen d'un fil tel que par le procédé MIG ou le procédé TIG ou au moyen d'électrodes ;
- soumettre à un refroidissement contrôlé la pièce en acier au carbone comportant à son extrémité le dépôt, immédiatement après la réalisation de ce dépôt ; et
- souder la pièce en acier au carbone par son extrémité comportant ledit dépôt, à la pièce en acier au manganèse par une technique quelconque de soudage.

3. Procédé selon la revendication 2, caractérisé en ce que le refroidissement contrôlé s'effectue depuis environ 600°C jusqu'à la température ambiante.

4. Procédé selon la revendication 2 ou 3, caractérisé en ce qu'après l'étape de refroidissement contrôlé, la pièce en acier au carbone possédant à son extrémité le dépôt, est soumise à un traitement de surfaçage de ce dépôt.

5. Procédé selon l'une des revendications 1 à 4, caractérisé en ce que la pièce en acier au carbone possédant à son extrémité le dépôt, est soudée à la pièce en acier au manganèse par une technique de soudage telle que par faisceau d'électrons ou faisceau laser.

6. Procédé selon l'une des revendications précédentes, caractérisé en ce qu'avant l'étape de soudage, le dépôt d'acier inoxydable austéno-ferritique sur la pièce en acier au carbone, a une épaisseur comprise entre environ 1 et 20 millimètres.

7. Procédé selon la revendication 6, caractérisé en ce que l'épaisseur précitée est comprise entre 1 et 10 millimètres.

8. Procédé selon l'une des revendications précédentes, caractérisé en ce que l'acier inoxydable austéno-ferritique a la composition chimique suivante :
| | |
|---|---|
| Carbone | 0,025 - 0,035% en poids |
| Manganèse | 6 - 11% en poids |
| Silicium | 0,5 - 1,5% en poids |
| Nickel | 5 - 8% en poids |
| Chrome | 17,5 - 20% en poids |
| Molybdène | 0,5% en poids |
| Niobium | 0,25 - 0,35% en poids |
| Azote | résiduel allant jusqu'à 700 ppm |
| Phosphore et soufre | 0,030% en poids |
et dont la teneur en ferrite delta mesurée par comptage est comprise entre environ 5 et 15% en volume.

9. Procédé selon la revendication 8, caractérisé en ce que l'acier inoxydable austéno-ferritique a la composition chimique suivante :
| | |
|---|---|
| Carbone | 0,030 % en poids |
| Manganèse | 6,20 % en poids |
| Silicium | 0,80 % en poids |
| Nickel | 7,90 % en poids |
| Chrome | 18,20% en poids |
| Molybdène | traces |
| Niobium | 0,30% en poids |
| Azote | résiduel allant jusqu'à 700ppm |
| Phosphore et soufre | 0,030% en poids. |
et dont la teneur en ferrite delta est comprise entre 6 et 10% en volume.

10. Procédé selon la revendication 2, caractérisé en ce que le fil précité ou les électrodes précitées présentent la composition chimique selon la revendication 8 ou 9.

11. Procédé selon l'une quelconque des revendications précédentes, caractérisé en ce que la pièce en acier au carbone est un rail de chemin de fer et en ce que la pièce en acier au manganèse est une pièce de voie.

## Claims

1. Method of joining a manganese steel workpiece to at least another workpiece of carbon steel, characterized in that it consists in :
- depositing an austenitic-ferritic stainless steel at the end of at least one workpiece of carbon steel and
- welding the workpiece of carbon steel provided at its end with the deposit thus obtained to the workpiece of manganese steel.

2. Method according to claim 1, characterized in that it consists in :
- preheating before the aforesaid depositing step the workpiece of carbon steel to about 300-600°C ;
- providing a deposit of austenitic-ferritic stainless steel upon the end of the workpiece of carbon steel by means of a wire such as by the MIG process or the TIG process or by means of electrodes ;
- subjecting to a controlled cooling the workpiece of carbon steel comprising the deposit at its end immediately after the providing of this deposit ; and
- welding the workpiece of carbon steel with its end comprising the said deposit to the piece of manganese steel by any welding technique whatsoever.

3. Method according to claim 2, characterized in that the controlled cooling is effected from about 600°C down to the room temperature.

4. Method according to claim 2 or 3, characterized in that after the controlled cooling step the workpiece of carbon steel having the deposit at its end is subjected to a treatment for surfacing this deposit.

5. Method according to one of claims 1 to 4, characterized in that the workpiece of carbon steel having the deposit at its end is welded to the workpiece of manganese steel by a welding technique such as by an electron beam or a laser beam.

6. Method according to one of the foregoing claims, characterized in that prior to the welding step the deposit of austenitic-ferritic stainless steel onto the workpiece of carbon steel has a thickness lying between about 1 and 20 millimetres.

7. Method according to claim 6, characterized in that the aforesaid thickness is lying between 1 and 10 millimetres.

8. Method according to one of the foregoing claims, characterized in that the austenitic-ferritic stainless steel has the following chemical composition :
| | |
|---|---|
| Carbon | 0.025 - 0.035% by weight |
| Manganese | 6 - 11% by weight |
| Silicon | 0.5 - 1.5% by weight |
| Nickel | 5 - 8% by weight |
| Chromium | 17.5 - 20% by weight |
| Molybdenum | 0.5% by weight |
| Niobium | 0.25 - 0.35% by weight |
| Residual nitrogen | up to 700 ppm |
| Phosphorus and sulphur | 0.030% by weight |
and the delta ferrite content of which measured by counting is lying between about 5 and 15% by volume.

9. Method according to claim 8, characterized in that the stainless austenitic-ferritic steel has the following chemical composition :
| | |
|---|---|
| Carbon | 0.030% by weight |
| Manganese | 6.20% by weight |
| Silicon | 0.80% by weight |
| Nickel | 7.90% by weight |
| Chromium | 18.20% by weight |
| Molybdenum | traces |
| Niobium | 0.30% by weight |
| Residual nitrogen | up to 700 ppm |
| Phosphorus and sulphur | 0.030% by weight |
and the delta ferrite content of which is lying between 6 and 10% by volume.

10. Method according to claim 2, characterized in that the aforesaid wire or the aforesaid electrodes exhibit the chemical composition according to claim 8 or 9.

11. Method according to any one of the foregoing claims, characterized in that the workpiece of carbon steel is a railway rail and in that the workpiece of manganese steel is a railway track part.

## Patentansprüche

1. Verfahren zur Verbindung eines Werkstückes aus Manganstahl mit wenigstens einem anderen Werkstück aus Kohlenstoffstahl, dadurch gekennzeichnet, dass es darin besteht:
- einen rostfreien austenitisch-ferritischen Stahl am Ende von wenigstens einem Werkstück aus Kohlenstoffstahl aufzutragen und
- das an seinem Ende mit dem derart erhaltenen Überzug versehene Werkstück aus Kohlenstoffstahl an das Werkstück aus Manganstahl anzuschweissen.

2. Verfahren nach Anspruch 1, dadurch gekennzeichnet, dass es darin besteht:
- das Werkstück aus Kohlenstoffstahl vor dem vorgenannten Auftragsschritt bis ungefähr 300-600°C vorzuwärmen;
- einen Auftrag aus rostfreiem austenitisch-ferritischem Stahl an dem Ende des Werkstückes aus Kohlenstoffstahl mittels eines Drahtes durch das MIG-Verfahren oder das TIG-Verfahren oder mittels Elektroden zu schaffen;
- das an seinem Ende den Überzug aufweisende Werkstück aus Kohlenstoffstahl unmittelbar nach der Herstellung dieses Auftrages einer kontrollierten Kühlung zu unterwerfen ; und
- das Werkstück aus Kohlenstoffstahl mit seinem den besagten Überzug aufweisenden Ende an das Werkstück aus Manganstahl durch irgendein Schweissverfahren anzuschweissen.

3. Verfahren nach Anspruch 2, dadurch gekennzeichnet, dass die kontrollierte Kühlung von ungefähr 600°C ab bis zu der Umgebungstemperatur erfolgt.

4. Verfahren nach Anspruch 2 oder 3, dadurch gekennzeichnet, dass nach dem kontrollierten Kühlungsschritt, das an seinem Ende den Überzug besitzende Werkstück aus Kohlenstoffstahl einer Behandlung zur Oberflächenverbesserung dieses Überzuges unterworfen wird.

5. Verfahren nach einem der Ansprüche 1 bis 4, dadurch gekennzeichnet, dass das an seinem Ende den Auftrag besitzende Werkstück aus Kohlenstoffstahl an das Werkstück aus Manganstahl durch ein Schweissverfahren, wie durch ein Elektronenstrahlbündel oder Laserstrahlbündel angeschweisst wird.

6. Verfahren nach einem der vorangehenden Ansprüche, dadurch gekennzeichnet, dass vor dem Verschweissungsschritt der Auftrag aus rostfreiem austenitisch-ferritischem Stahl auf dem Werkstück aus Kohlenstoffstahl eine zwischen ungefähr 1 und 20 Millimetern liegende Dicke hat.

7. Verfahren nach Anspruch 6, dadurch gekennzeichnet, dass die vorgenannte Dicke zwischen 1 und 10 Millimetern liegt.

8. Verfahren nach einem der vorangehenden Ansprüche, dadurch gekennzeichnet, dass der rostfreie austenitisch-ferritische Stahl die folgende chemische Zusammensetzung hat :
| | |
|---|---|
| Kohlenstoff | 0,025 - 0,035 Gewichtsprozent |
| Mangan | 6 - 11 Gewichtsprozent |
| Silizium | 0,5 - 1,5 Gewichtsprozent |
| Nickel | 5 - 8 Gewichtsprozent |
| Chrom | 17,5 - 20 Gewichtsprozent |
| Molybdän | 0,5 Gewichtsprozent |
| Niobium | 0,25 - 0,35 Gewichtsprozent |
| restlicher Stickstoff | bis zu 700 ppm |
| Phosphor und Schwefel | 0,030 Gewichtsprozent |
und dessen durch Zählen gemessene Deltaferritgehalt zwischen ungefähr 5 und 15 Volumenprozent liegt.

9. Verfahren nach Anspruch 8, dadurch gekennzeichnet, dass der rostfreie austenitisch-ferritische Stahl die folgende chemische Zusammensetzung hat :
| | |
|---|---|
| Kohlenstoff | 0,030 Gewichtsprozent |
| Mangan | 6,20 Gewichtsprozent |
| Silizium | 0,80 Gewichtsprozent |
| Nickel | 7,90 Gewichtsprozent |
| Chrom | 18,20 Gewichtsprozent |
| Molybdän | Spuren |
| Niobium | 0,30 Gewichtsprozent |
| restlicher Stickstoff | bis zu 700 ppm |
| Phosphor und Schwefel | 0,030 Gewichtsprozent |
und dessen Deltaferritgehalt zwischen 6 und 10 Volumenprozent liegt.

10. Verfahren nach Anspruch 2, dadurch gekennzeichnet, dass der vorgenannte Draht und die vorgenannten Elektroden die chemische Zusammensetzung gemäss Anspruch 8 oder 9 aufweisen.

11. Verfahren nach irgendeinem der vorangehenden Ansprüche, dadurch gekennzeichnet, dass das Werkstück aus Kohlenstoffstahl eine Eisenbahnschiene ist und dass das Werkstück aus Manganstahl ein Gleiswerkstück ist.
